Europäisches Patentamt

European Patent Office

Office européen des brevets

(11) Veröffentlichungsnummer: **0 495 203 A2**

# EUROPÄISCHE PATENTANMELDUNG

(21) Anmeldenummer: **91121227.2**

(22) Anmeldetag: **01.01.92**

(51) Int. Cl.5: **G10H 1/00**

(30) Priorität: **15.01.91 DE 4100956**
**09.10.91 DE 9112534 U**

(43) Veröffentlichungstag der Anmeldung:
**22.07.92 Patentblatt 92/30**

(84) Benannte Vertragsstaaten:
**AT BE CH DE DK ES FR GB GR IT LI LU MC
NL PT SE**

(71) Anmelder: **Ernst, Wolfgang**
**Hebelstrasse 10/2**
**W-7562 Gernsbach(DE)**
Anmelder: **Lang, Norbert**
**Kronenstrasse 22**
**W-7500 Karlsruhe(DE)**

(72) Erfinder: **Ernst, Wolfgang**
**Hebelstrasse 10/2**
**W-7562 Gernsbach(DE)**
Erfinder: **Lang, Norbert**
**Kronenstrasse 22**
**W-7500 Karlsruhe(DE)**

(74) Vertreter: **Zipse & Habersack**
**Lessingstrasse 12**
**W-7570 Baden-Baden(DE)**

(54) **Elektronisches Lehr-,Begleit- und Übungsmusikgerät.**

(57) Die Erfindung betrifft ein elektronisches Lehr-, Begleit- und Übungsmusikgerät, das von einem gespielten Musikinstrument unabhängig ist. Das Gerät ist gekennzeichnet durch an sich bekannte Einrichtungen zur digitalen Tonerzeugung, Taktgabe, Begleitung, Bedienung und Eingabe von digitalen Notendaten, die mit einer Steuereinheit verbunden sind, die über einen Digitalanalogwandler mit einer elektro-akustischen Einrichtung zur akustischen Wiedergabe der dem eingegebenen Musikstück entsprechenden Notensequenzen und mit einer in Verbindung mit einer Klaviertastatur oder einem Gitarrengriffbrett stehenden oder diese darstellenden, optischen Anzeigeeinrichtung zur optischen Anzeige der gespielten Notensequenzen verbunden ist.

EP 0 495 203 A2

Die Erfindung betrifft ein elektronisches Lehr-, Begleit- und Übungsmusikgerät, das von einem gespielten Musikinstrument unabhängig ist.

Auf dem Gebiet der elektronischen Tonerzeugung, insbesondere der digitalen Musikerzeugung, sind schon die verschiedensten Instrumente, wie elektronische Orgeln, Synthesizer, Sampler od. dgl., bekanntgeworden, wobei jedes dieser Instrumente firmenbezogen vom Hersteller nach einem bestimmten System aufgebaut ist. Die Instrumente können im allgemeinen über einen Midianschluß miteinander verbunden und von einem Keyboard oder einem Sequenzer gesteuert gespielt werden.

Die bisher bekanntgewordenen Sequenzer sind derart aufgebaut, daß sie Notensequenzen in Form von digitalen Signalen über einen Midianschluß dem Musikinstrument, beispielsweise einem Synthesizer, zufuhren, wobei entsprechend der Notenfolge der Synthesizer ein Musikstuck über eine elektroakustische Einrichtung wiedergibt.

Die bisher bekanntgewordenen Sequenzer sind entweder externe Geräte oder in den Keyboards oder elektronischen Orgeln eingebaut.

Die externen Geräte erfordern, daß der Anwender verschiedene midifähige Geräte, nämlich die elektronischen Tonerzeuger, besitzt. Sie erfordern ferner ein technisches Einarbeiten und eine musikalische Vorbildung, damit überhaupt Mastersequenzen eingespielt werden können.

Bei dem in den Keyboards oder Orgeln eingebauten Sequenzern besteht die Vorbedingung, die Notenfolge selbst einzuspielen, d. h., der Bedienende muß musizieren können.

Es sind auch schon Sequenzer bekanntgeworden, die Dateneingabevorrichtungen, wie Kartenlesegeräte oder Diskettenstationen, aufweisen, in die durch entsprechende Datenträger begrenztes, herstellerabhängiges Softwarematerial eingespielt werden kann.

Es sind ferner Lehrmethoden mit elektronischer Unterstützung ausschließlich herstellerspezifisch bekanntgeworden, und diese Instrumente dienen dann nur für Tasteninstrumente, wie Keyboards, wobei das verwendete Notenmaterial herstellerspezifisch entsprechend eingeschränkt ist.

Der vorliegenden Erfindung liegt nun die Aufgabe zugrunde, ein elektronisches Lehr-, Begleitund Übungsmusikgerät zu schaffen, das unabhängig von dem gespielten Musikinstrument die Möglichkeit eröffnet, jegliches Notenmaterial jedem beliebig Musizierenden nicht nur als geschriebene bzw. gedruckte Noten, sondern auch akustisch, elektronisch-optisch und digitalisiert zur Verfügung zu stellen.

Zur Lösung der gestellten Aufgabe wird ein elektronisches Lehr-, Begleit- und Übungsmusikgerät, das von einem gespielten Musikinstrument unabhängig ist, gemäß Anspruch 1 vorgeschlagen.

Mit dem Gerät gemäß der Erfindung werden mehrere Vorteile erreicht. So können beliebige digitale Notendaten, die Notensequenzen von Musikstücken entsprechen, durch die Eingabeeinrichtung eingegeben werden, die dann nicht nur mit veränderbarer Taktgeschwindigkeit und beliebiger Tonhöhe akustisch wiedergegeben werden können, sondern die auch entsprechend optisch an einer Klaviatur, einem Gitarrengriffbrett oder einer diese Einrichtungen darstellenden Anzeigeeinrichtung optisch angezeigt werden. Damit kann das Gerät gemäß der Erfindung vom absoluten Anfänger bzw. Laien bis zum professionellen Musiker verwendet werden. Ferner wird die Spiel- und Übungsfreude durch das Vorspielen bzw. Mitspielen auf einem beliebigen, vom Gerät unabhängigen Instrument gegeben. Das Gerät kann ferner als Theorielerngerät, z. B. zum Erlernen der Harmonielehre, auch ohne zusätzliches Instrument verwendet werden.

Da im allgemeinen der Lernende eines Musikinstrumentes so lange kein befriedigendes Hörerlebnis hat, bis er nicht halbwegs perfekt spielen kann, sorgt das Gerät dafür, daß von Anfang an ein perfektes Vorspiel mit dem entsprechenden Hörerlebnis den Lernenden zum perfekten Mitspielen führt.

Da das Gerät gemäß der Erfindung auch durch Taktgeber eine Rhythmus- sowie eine Begleiteinrichtung enthält, kann der Spieler eines beliebigen Gerätes zum Notenmaterial eine perfekte "Begleit-Combo" erhalten, die unabhängig von der Software anderer elektronischer Musikinstrumente ist.

In den Unteransprüchen sind wertvolle Erweiterungen und Bereichungen des erfindungsgemäßen Gerätes dargestellt.

Die Maßnahme gemäß Anspruch 2 bezieht sich auf die besondere Ausgestaltung eines Frontpanels eines das Gerät aufnehmenden Gehäuses, wobei die Taster für die Tonhöhe der Akkorde und der Solostimmen zusammen mit der optischen Anzeigeeinrichtung, insbesondere den LED-Anzeigeelementen, in einer der Klaviatur entsprechenden Anordnung im Bereich der vorderen Unterkante des Frontpaneels nebeneinander liegen. Dadurch ist es in einfacher Weise möglich, das Gerät auf eine Standardtastatur eines Klavieres oder eines Keyboards aufzustellen, so daß an der Anzeigeeinrichtung verfolgt werden kann, welche Tasten für das Spiel des eingegebenen Musikstückes gedrückt werden müssen.

Um unterschiedliche Tastenbreiten der verschiedensten Musikinstrumente zu berücksichtigen, kann gemäß Anspruch 3 unter den Tastern für die Tonhöhe der Akkorde und der Solostimmen eine auf verschiedene Tastbreiten zuschneidbare Klaviaturschablone angebracht werden. Je nachdem, wie breit die Tastatur ist, kann die Schablone entsprechend beschnitten werden.

Es ist gemäß Anspruch 4 ferner möglich, das Gerät rutschfest, nach hinten verstell- und abstützbar, auf jedem Aufbau, der sich an die Tastatur eines Tasteninstrumentes anschließt, aufzustellen. Die Aufstellung dergestalt, daß die LEDs über der Klaviatur anzeigen, welche Tasten gedrückt werden sollen, dient dem absoluten Laien (Anfänger) auf dem Gebiet der Tasteninstrumente.

Aber auch bei Gitarren und Lauteninstrumenten kann das Gerät gemäß der Erfindung in vorteilhafter Weise eingesetzt werden. Hierzu besteht gemäß Anspruch 5 die optische Anzeigeeinrichtung, insbesondere die LED-Anzeigeelemente, aus einer Griffbrettnachbildung, die aus einer mittels einer Klemmvorrichtung am Gitarren- oder Lautenhals befestigbaren Leiste besteht, wobei die Anzeigeelemente zwischen den nachgebildeten Stegen und Seiten quer zur Leiste verlaufend angeordnet sind.

Gemäß Anspruch 6 kann das Gerät auch mit einem Midiinterface versehen werden, mit dem es möglich ist, die eingegebenen Noten auch über andere elektronische Musikeinrichtungen abzuspielen.

An dem Frontpaneel des das Gerät aufnehmenden Gehäuses können ferner noch Displayeinrichtungen zur Anzeige der Taktgeschwindigkeit, des Taktablaufes sowie mindestens ein Lautsprecher angeordnet sein.

Anhand der Zeichnungen soll am Beispiel bevorzugter Ausführungsformen das Gerät gemäß der Erfindung näher erläutert werden.

In den Zeichnungen zeigt

Fig. 1    ein Blockschaltbild des Gerätes gemäß der Erfindung.

Fig. 2    zeigt eine Ansicht des Frontpaneels des das Gerät aufnehmenden Gehäuses mit anhängbarer Tastaturschablone.

Fig. 3    zeigt das Gerät mit einer Einrichtung zur rutschfesten, nach hinten abgestützten Aufstellung in perspektivischer Ansicht.

Fig. 4    zeigt eine Anzeigevorrichtung für ein Gitarren- oder Lauteninstrument.

Die Figuren 5 bis 15 zeigen verschiedene Einsatzmöglichkeiten des Gerätes gemäß der Erfindung.

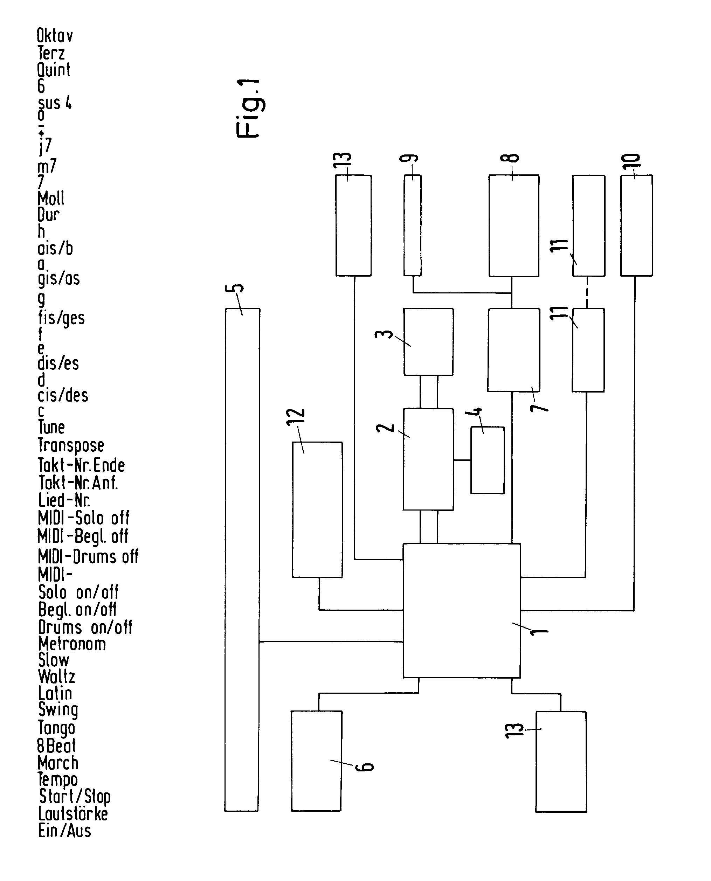

Wie sich aus Fig. 1 ergibt, besteht das Gerät gemäß der Erfindung im wesentlichen aus einer Steuereinheit 1, die beispielsweise ein Mikroprozessor mit einem Speicher und Steuerelementen (Mikrocomputer) sein kann. Mit dieser Steuereinheit 1 sind über Bus-Leitungen Einrichtungen zur digitalen Tonerzeugung 2, Taktgabe 3, Begleitung 4, Bedienung 5, Eingabe von digitalen Notendaten 6, z. B. ROM-Karten, verbunden.

Ferner ist mit der Steuereinheit 1 über einen Analogdigitalwander 7 eine elektro-akustische Anordnung 8, ggf. mit einem Audio-Ausgang 9, verbunden. Die elektro-akustische Einrichtung kann auch die Rhythmuseinrichtung, die Begleitung, den Baß und die Soloinstrumente enthalten.

Für die Ansteuerung externer Anzeigeeinrichtungen ist bei 10 ein entsprechender Anschluß vorhanden.

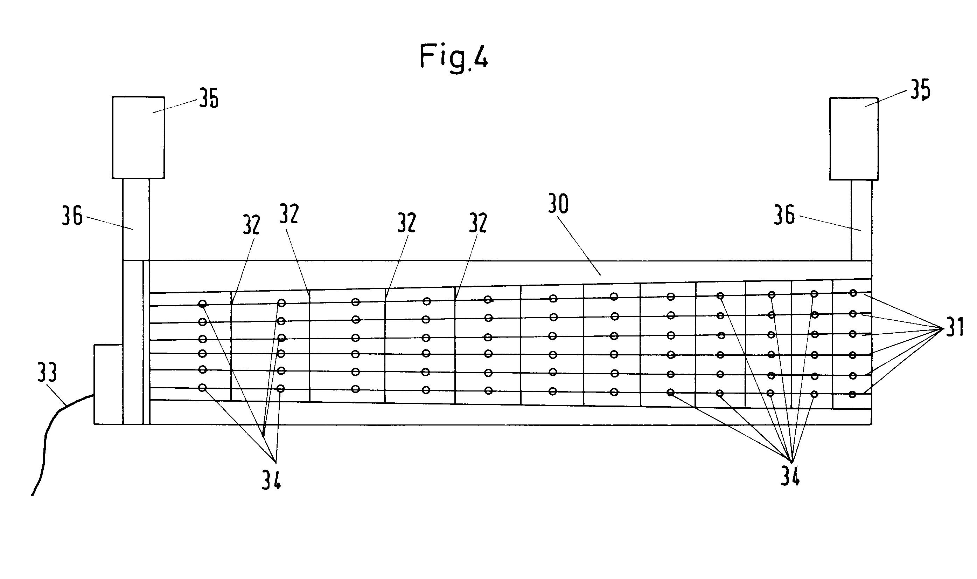

Die Steuereinheit 1 kann auch mit einer Anzeigeeinrichtung 11 für ein Gitarren- oder Lauteninstrument versehen sein, die aus einer in Fig. 4 dargestellten Leiste besteht, die eine Griffbrettnachbildung aufweist.

Schließlich kann die Steuereinheit noch mit einer Displayeinrichtung 12 verbunden werden, auf der die Midikanalnummer, die Liednummer, die Taktnummer, das Tempo, der Transposer, der Tuner od. dgl. angezeigt werden.

Schließlich kann die Steuereinheit 1 auch mit einem oder mehreren Midiinterface/Midiinterfaces (13) verbunden sein.

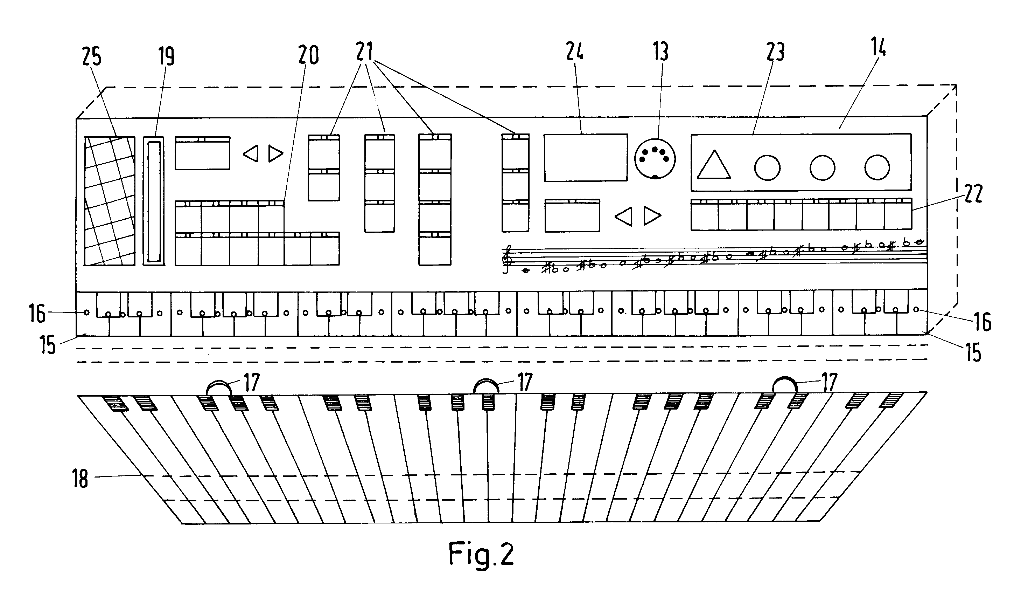

Wie sich aus Fig. 2 ergibt, sind an der Unterkante des Frontpaneels 14 des das Gerät aufnehmenden Gehäuses mehrere Taster 15 für die Tonhöhe der Akkorde und der Solostimmen angeordnet, in denen sich LED-Anzeigeelemente 16 befinden, wobei die Anordnung der Taster entsprechend einer Klaviatur mit weißen und schwarzen Tasten erfolgt. Der Abstand ist dabei so gewählt, daß er dem Abstand einer Normaltastatur entspricht.

Zur Anpassung an verschiedene Tastaturbreiten kann an der Unterseite über entsprechende Befestigungselemente 17 eine auf verschiedene Tastenbreiten zuschneidbare Klaviertastaturschablone 18 angehängt werden.

Das Gerät wird mit dem Frontpaneel und ggf. der Schablone im hinteren Bereich auf die Tastatur eines Tasteninstrumentes aufgestellt, so daß dann unmittelbar durch Aufleuchten der entsprechenden Anzeigeelemente die zu drückenden Tasten angezeigt werden.

In dem Frontpaneel sind ferner noch ein Einsteckschlitz 19 für den Datenträger der einzugebenden Notendaten sowie eine Tastengruppe 20 für die Akkordzusammensetzung, mehrere Tastengruppen 21 für Abstimmung und Transponierung, Eingabe, Schlagzeuge, Begleitung und Soloinstrumente sowie eine weitere Tastengruppe 22 zur Eingabe der verschiedenen Rhythmen angeordnet.

Der Taktablauf kann an einem Display 23 verfolgt werden, und das Tempo wird in einem Display 24 angezeigt. Schließlich ist an der Frontseite noch ein Lautsprecher 25 hinter einer entsprechenden Abdeckung angeordnet.

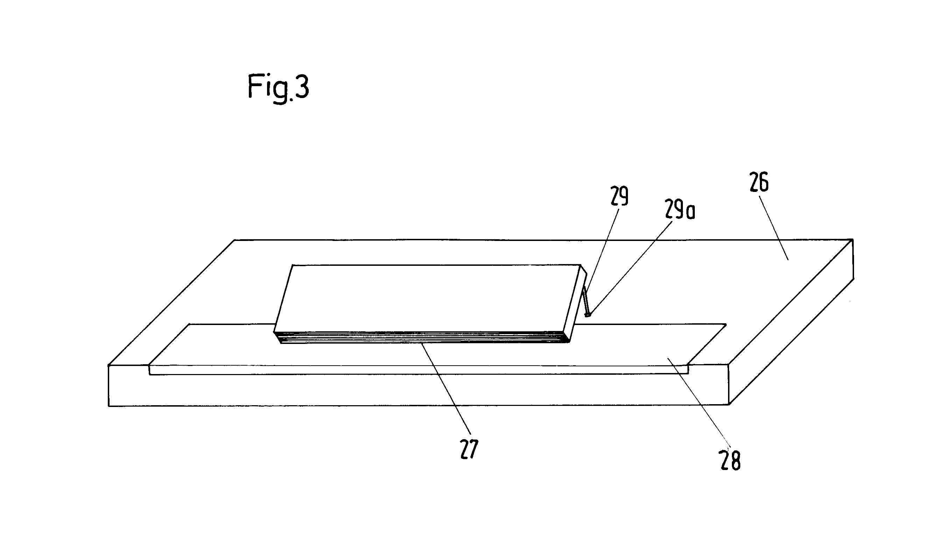

Fig. 3 zeigt eine Möglichkeit, das Gerät gemäß der Erfindung rutschfest (27) auf der Tastatur 28 eines Keyboards 26 aufzustellen. Bei dieser Aufstellung ist die verstellbare, hintere Abstützung 29 mit den rutschfesten Füßen 29a so eingestellt, daß eine leichte Schräglage des Gerätes entsteht.

Fig. 4 zeigt eine weitere Möglichkeit der Anzeigeeinrichtung des Gerätes gemäß der Erfindung. Nach dieser Ausführungsform ist eine Leiste 30 vorgesehen, auf der eine Nachbildung eines Griffbrettes eines Saiteninstrumentes, beispielsweise einer Gitarre oder einer Laute, dargestellt ist. Diese Nachbildung besteht aus den Saiten 31 und den Stegen 32. Im Bereich der nachgebildeten Saiten 31 und der nachgebildeten Stege 32 sind LED-Anzeigeelemente 34 vorgesehen, die quer zur Leiste 30 verlaufen. Die Anzeigeelemente sind in entsprechender Matrix über ein Kabel 33 mit der Steuereinheit 1 verbunden. Die Leiste 30 weist ferner eine Klemmvorrichtung 35 mit Abstandhaltern 36 auf, um die Leiste 30 an einem Gitarren- oder Lautenhals zu befestigen. Dadurch kann die Gitarre unabhängig weitergespielt werden, wobei durch die LED-Anzeigeelemente 34 der Leiste 30 die zu greifenden Saiten abgelesen werden können. Die Steuereinheit steuert dabei von dem eingegebenen Musikstück die Anzeigeelemente 34 entsprechend an, wobei gleichzeitig aus dem Lautsprecher der mit der Gitarre zu erzeugende Klang hörbar ist.

Das Gerät gemäß der Erfindung ist sehr vielseitig verwendbar. So kann es beispielsweise vom Privatmusiklehrer im Einzel- oder Gruppenunterricht, in Schulen, bei Autodidakten sowie bei der vorschulischen Musikerziehung verwendet werden, wobei das Gerät bei allen nur denkbaren Musikinstrumenten und auch beim Gesangsunterricht einsetzbar ist.

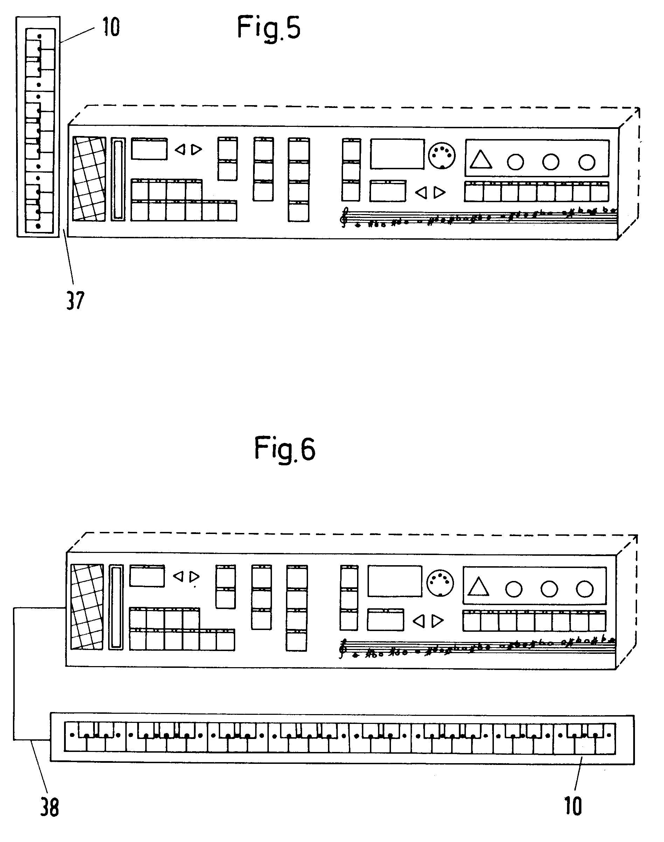

Die optische Anzeigeeinrichtung, mit der die Lage der Bedienungselemente musikinstrumentespezifisch dargestellt werden kann, kann auch, wie in Fig. 5 gezeigt, mittels einer Steckverbindung 37 an das Gerät angesetzt oder angesteckt werden. Es ist auch möglich, wie in Fig. 6 gezeigt, die Anzeigeeinrichtung 10 mittels eines Kabels 38 mit dem Gerät zu verbinden und sie dann an beliebigen Stellen, vorzugsweise in unmittelbarer Nähe des Musikinstrumentes, einzusetzen. Alle externen Anzeigevorrichtungen haben eine eigene kleine Steuereinheit zur instrumentenspezifischen Aufbereitung der vom Gerät gelieferten Daten. Damit ergibt sich eine vollkommene Unabhängigkeit von dem gespielten Musikinstrument, das ein mechanisches oder elektronisches Musikinstrument sein kann. Von besonderem Vorteil ist dabei, daß zu der optischen Anzeige ein exaktes akustisches Vorspiel erfolgt, bei dem der Musizierende mitspielen kann und dabei die Möglichkeit hat, sich durch Anpassen der Geschwindigkeit des Spieles am Gerät einzuüben.

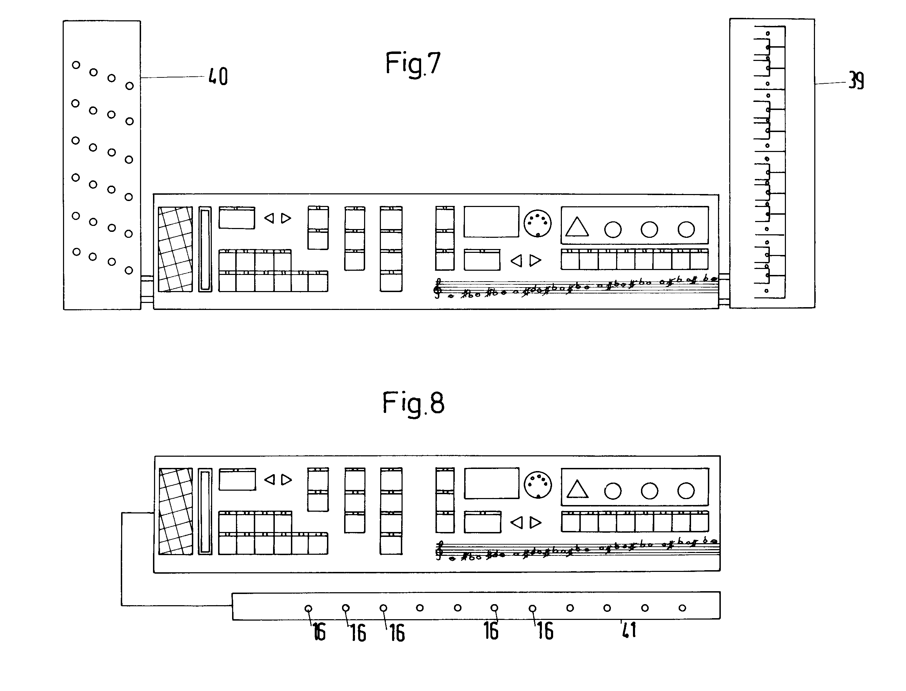

In Fig. 7 ist eine Kombination zweier Anzeigevorrichtungen 39, 40 dargestellt, womit das Spielen auf einem Akkordeon eingeübt werden kann. Das rechte Anzeigegerät 39 zeigt die Tastaturdarstellung mit Hilfe der LEDs, und die linke Anzeigevorrichtung 40 zeigt die Knopfleiste der Baßdarstellung mit Hilfe von LEDs.

Fig. 8 zeigt das Gerät in Verbindung mit einer Anzeigevorrichtung 41, das eine Querflöte darstellt. Dabei werden die zu bedienenden Klappen bzw. Löcher durch die LED 16 gezeigt. Die gleiche Anordnung kann auch für Block-, Alt- oder Pikkoloflöten in senkrechter Anordnung dargestellt werden. Schließlich ist auch eine Abwandlung von anderen Blasinstrumenten, beispielsweise Klarinetten, Saxophone, möglich, wobei die LEDs die zu bedienenden Klappen zeigen. Auf gleiche Weise können auch die Oboe, das Fagott usw. dargestellt werden.

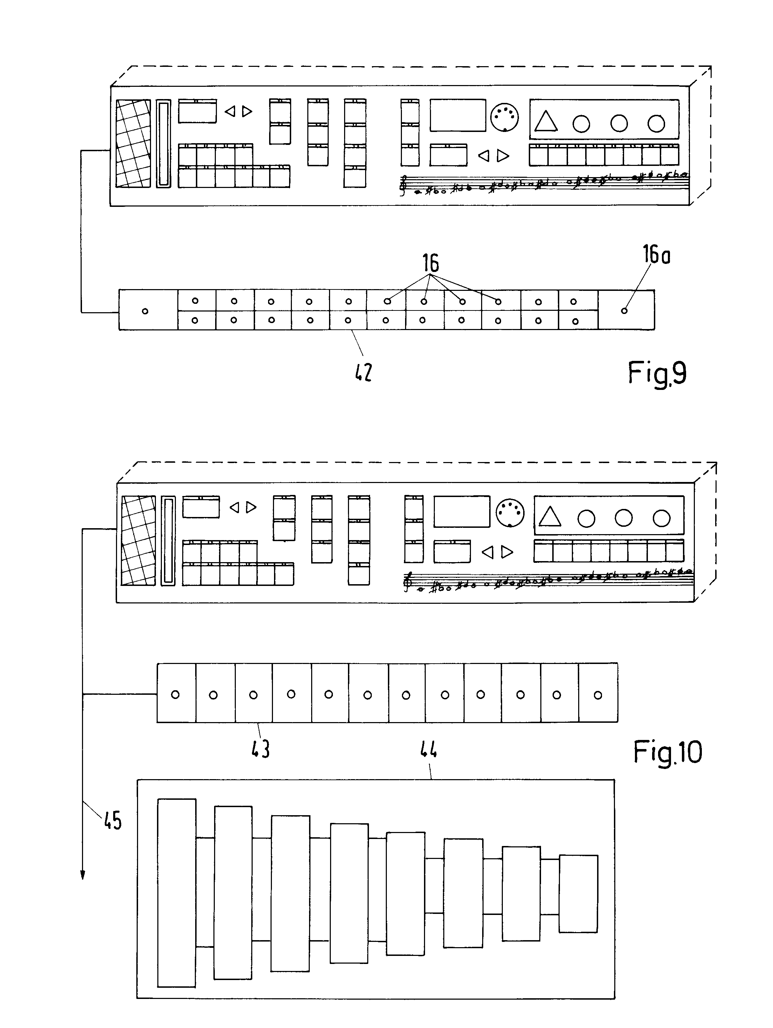

In Fig. 9 ist eine Anordnung dargestellt, bei der die Anzeigevorrichtung 42 eine Mundharmonika darstellt. Die LEDs 16 können zweifarbig für Ziehen und Blasen dargestellt werden. 16 a zeigt die Bedienung des Schiebers.

Fig. 10 zeigt eine Anzeigevorrichtung 43 für ein Schlaginstrument 44, beispielsweise ein Xylophon, ein Metallophon, ein Glockenspiel usw. Dabei kann auch ein Serienanschluß 45 vorgesehen werden, mit dem weitere Anzeigevorrichtungen zugeschaltet werden können. Auf diese Weise ist ein Gruppenspiel möglich.

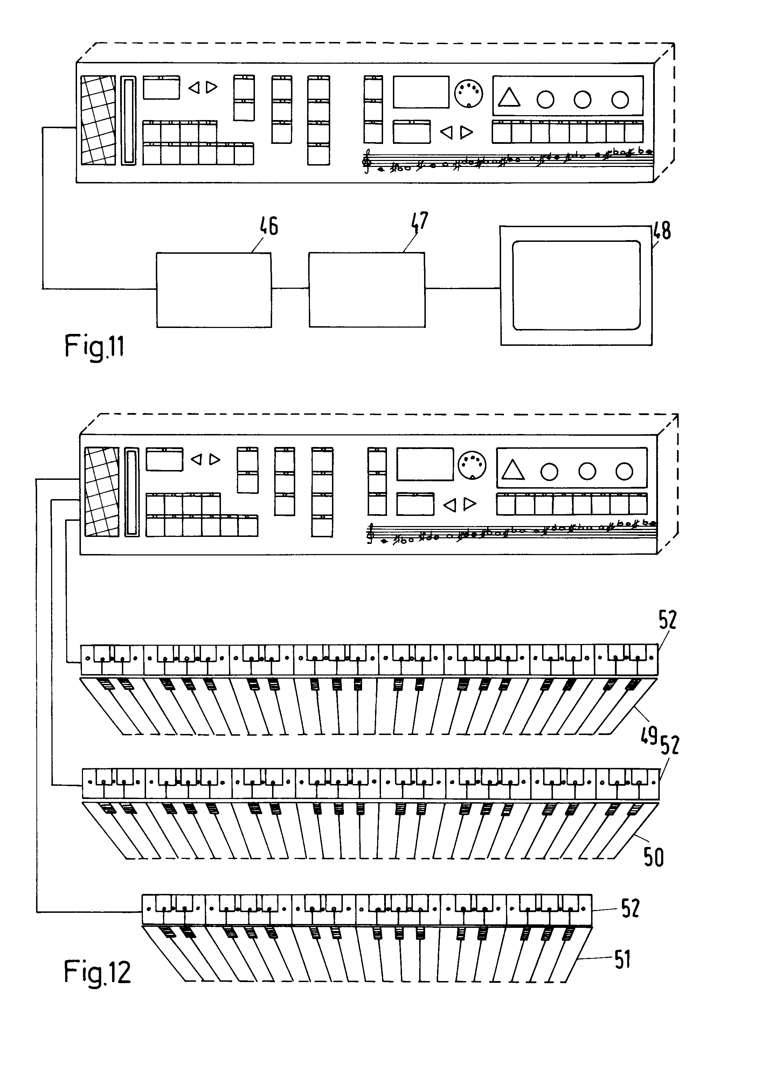

In Fig. 11 ist eine weitere Möglichkeit der Anwendung des Gerätes gemäß der Erfindung dargestellt. Die Anzeigeeinrichtung mit Kabelverbindung besteht dort zunächst aus einem Video-Computer-Interface 46, das mit einem Computer 47 und einem Bildschirm 48 verbunden ist. Diese Anordnung kann für alle nur denkbaren Instrumente, Theorieprogramme, Gehörbildung usw., für bereits vorhandene Computerlernprogramme, z. B. Gitarre, Keyboard usw., verwendet werden. Das Gerät ist anwendbar auf jegliches in das Gerät eingelesene Notenmaterial und für jedes Instrument einsetzbar. Auf diese Weise kann auch Gruppenunterricht mit verschiedenen oder gleichen Instrumenten oder auch einzeln durchgeführt werden. Das Gerät steuert über das Video-Computer-Interface für jeden Schüler einen Monitor, auf dem die im Moment nach Notenvorlage vom Gerät vorgespielten und vom Schüler mitzuspielenden Noten dargestellt werden. Zusätzlich zeigt der Monitor für den Schüler eine Darstellung der Bedienung seines Instrumentes mit Finger- und Handhaltung.

Eine weitere Möglichkeit besteht, wie in Fig. 12 dargestellt, darin, das Gerät für eine zweimanualige Orgel mit Pedal anzuwenden. Jeden Manual 49, 50 sowie dem Pedal 51 ist eine Anzeigeleiste 52 zugeordnet, die entsprechend dem Notenmaterial der Orgel die Anzeige durchführt. Die gleiche Anordnung kann in vereinfachter Form auch für ein Klavier mit einem Manual oder einem Chembalo, einem Spinett od. dgl. benutzt werden.

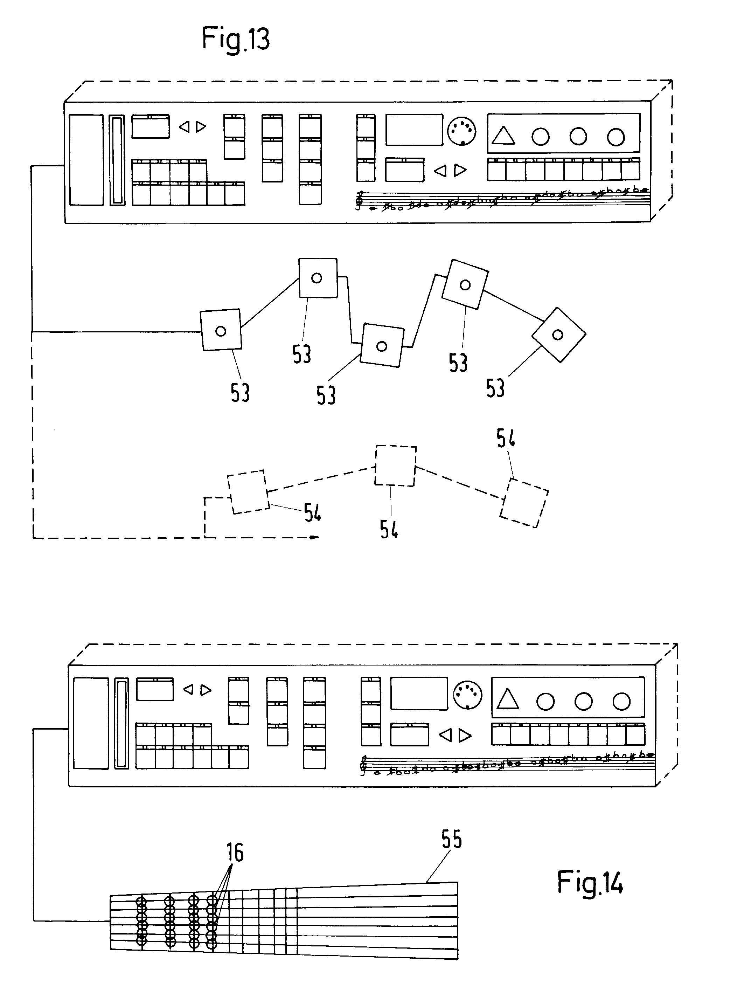

In Fig. 13 ist eine Möglichkeit dargestellt, um die Betätigung eines Schlaginstrumentes, beispielsweise eines Schlagzeuges, darzustellen. Dort ist das Gerät über ein Kabel mit den Pads 53 verbunden, die mit LEDs versehen am Schlaginstrument beispielsweise durch Klettenverschluß befestigt sind.

Es ist auch möglich, wie bei 54 gestrichelt dargestellt, in Serienschaltung weitere Schlagzeuge vorzusehen, bei denen jeder Spieler pädagogisch fundiert mitschlagen kann, wobei die LEDs entsprechend dem Lernprogramm und den verwendeten Notenvorlagen aufleuchten. Auf diese Weise kann auch ein Gruppenspiel mit beiliebigen Schlaginstrumenten, beispielsweise mit den Orff'schen Instrumenten, durchgeführt werden, wobei Gruppenspiel, Solo, Begleitung, Baß und Perkussion über allgemein an jeder Anzeigeeinrichtung vorhandenen Serienschaltvorrichtung dargestellt werden kann.

In Fig. 14 ist eine Möglichkeit gezeigt, über ein Kabel eine Anzeigevorrichtung 55 für beliebige Saiteninstrumente, wie Gitarre, Baß, Banjo, Geige, Cello, Hawaii-Gitarre, Zither, Zymbal usw., durchzuführen.

Dabei kann stets ein exaktes Vorspielen mit Anzeige der genauen Notenvorlage durchgeführt werden, wobei alles Notenmaterial verwendbar ist und keine spezifische Aufbereitung mit Ausnahme der Digitalisierung erforderlich ist. Das Gerät ist somit prinzipiell hersteller-, typen- und instrumentenunabhängig.

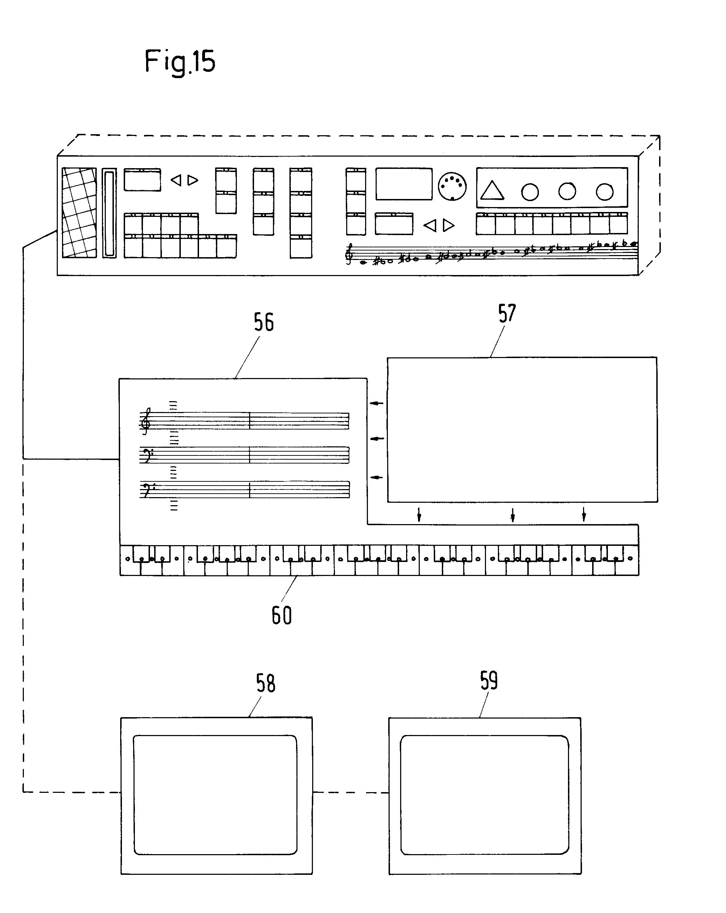

In Fig. 15 ist eine prinzipielle Anordnung für den Gruppenunterricht dargestellt. Hier ist das Gerät über Kabel mit einer Tafel 56 verbunden, auf der in Großdarstellung die einzelnen Noten durch LEDs dargestellt sind. An der Seite dieser Tafel befindet sich ein besonderer Modul 57, der einsteckbar ist und für jedes spezifische Instrument die Anzeige auf einem großen Bildschirm od. dgl. vornimmt. Es ist aber auch möglich, zwei große Bildschirme 58, 59 vorzusehen, die ebenfalls über Kabel mit dem Gerät verbunden sind, um auf dem einen Schirm 58 die fließende Notendarstellung und auf dem zweiten Schirm 59 die musikinstrumentenspezifische Betätigungseinrichtung darzustellen.

Die modulare Ausführung ist dabei derart, daß als fester Bestandteil eine Klaviatur 60 dargestellt wird mit optischer Anzeige der einzelnen Töne und einer Notenliniendarstellung, ebenfalls mit optischer Anzeige der jeweiligen Tonlage. Modular lassen sich alle oben angeführten Instrumentenanzeigen einsetzen, je nachdem, welches Instrument gelehrt wird. Das Gerät steuert die Tafel an, wobei die Tafel selbst "intelligent" ist und diverse Schaltvorrichtungen, wie "Start/Stop" und "Pause" besitzt. Bei der alternativen Bildschirmdarstellung 58, 59 kann, wie dargelegt, der eine Bildschirm für die Notendarstellung getrennt vom anderen Bildschirm für die Finger- und Handhaltung eingesetzt werden.

## Patentansprüche

1. Elektronisches Lehr-, Begleit- und Übungsmusikgerät, das von einem gespielten Musikinstrument unabhängig ist, **gekennzeichnet durch** an sich bekannte Einrichtungen zur digitalen Tonerzeugung (2), Taktgabe (3), Begleitung (4), Bedienung (5) und Eingabe von digitalen Notendaten (6), die mit einer Steuereinheit (1) verbunden sind, die über einen Digitalanalogwandler (7) mit einer elektro-akustischen Einrichtung (8) zur akustischen Wiedergabe der dem eingegebenen Musikstück entsprechenden Notensequenzen und mit einer in Verbindung mit einer Klaviertastatur oder einem Gitarrengriffbrett stehenden oder diese darstellenden, optischen Anzeigeeinrichtung (16, 28, 34) zur optischen Anzeige der gespielten Notensequenzen verbunden ist.

2. Gerät nach Anspruch 1, **dadurch gekennzeichnet,** daß die Einrichtungen zur Bedienung aus mehreren Tastern (15) bestehen, die auf einem Frontpaneel (14) eines das Gerät aufnehmenden Gehäuses derart angeordnet sind, daß die Taster (15) für die Tonhöhe der Akkorde und der Solostimmen zusammen mit der optischen Anzeigeeinrichtung (16), insbesondere LED-Anzeigeelemente, in einer der Klaviertastatur entsprechenden Anordnung im Bereich der vorderen Unterkante des Frontpaneels (14) nebeneinander liegen.

3. Gerät nach Anspruch 2, **dadurch gekennzeichnet,** daß unter den Tastern (15) für die Tonhöhe der Akkorde und der Solostimmen eine auf verschiedene Tastenbreiten zuschneidbare Klaviertastaturschablone (18) angeordnet ist.

4. Gerät nach Anspruch 1, 2 und 3, **dadurch gekennzeichnet,** daß an der Unterseite des Gerätes ein rutschfester Belag (27) und an der Rückseite des Gehäuses eine Stütze (29) mit einem rutschfesten Fuß (29a) angeordnet ist, die in Länge und Neigung verstellbar ist.

5. Gerät nach Anspruch 1, **dadurch gekennzeichnet,** daß die optische Anzeigeeinrichtung für ein Gitarren- oder Lauteninstrument aus einer ein Griffbrett nachbildenden Leiste (30) besteht, auf der die Stege (32) und die Saiten (31) nachgebildet sind, wobei zwischen den Stegen in Höhe der nachgebildeten Saiten LED-Anzeigeelemente (34) angeordnet sind, die in Matrizenschaltung über ein Kabel mit der Steuereinheit (1) verbunden sind, und wobei mittels einer Klemmvorrichtung (35) und Abstandhaltern (36) die Leiste (30) am Gitarren- oder Lautenhals befestigbar ist.

6. Gerät nach einem oder mehreren der vorhergehenden Ansprüche, **dadurch gekennzeichnet,** daß ein Midiinterfaceanschluß (13) mit dem Steuergerät (1) verbunden ist.

7. Gerät nach einem oder mehreren der vorhergehenden Ansprüche, **dadurch gekennzeichnet,** daß auf dem Frontpaneel (14) des das Gerät aufnehmenden Gehäuses je eine Displayeinrichtung zur Anzeige der Taktgeschwindigkeit (24), des Taktablaufes (23) sowie ein Lautsprecher (25) hinter einer entsprechenden Abdeckung angeordnet ist.

8. Gerät nach einem oder mehreren der vorhergehenden Ansprüche, **dadurch gekennzeichnet,** daß die optische Anzeigevorrichtung (10, 39, 40, 41, 42, 43, 46, 52, 53, 55) als Nachbildung der Bedienungs- oder Betätigungselemente des entsprechenden Musikinstrumentes ausgebildet ist und an das Gerät direkt über Stecker (37) ansetz- bzw. ansteckbar ist oder über Kabel (38) entfernt davon aufstellbar ist.

9. Gerät nach Anspruch 8, **dadurch gekennzeichnet,** daß die Anzeigevorrichtung aus zwei mit LEDs besetzten Teilen (39, 40) besteht, wobei die LEDs des Teiles (40) die Knopfanordnung des Baßteiles und die LEDs des Teiles (39) die Tastatur des Diskantteiles eines Akkordeons darstellen.

10. Gerät nach Anspruch 8, **dadurch gekennzeichnet,** daß die Anzeigeeinrichtung (41) aus einem länglichen Band oder einem Gehäuse besteht, in dem die LEDs (16) die Löcher oder Klappen einer Querflöte darstellen.

11. Gerät nach Anspruch 10, **dadurch gekennzeichnet,** daß die LEDs die Löcher oder Klappen von Block-, Alt- oder Piccoflöten darstellen.

12. Gerät nach Anspruch 10, **dadurch gekennzeichnet,** daß die LEDs die Klappen oder Ventile eines Saxophons, einer Klarinette, einer Oboe etc. darstellen.

13. Gerät nach Anspruch 8, **dadurch gekennzeichnet,** daß die Anzeigevorrichtung (42) aus einem länglichen Band oder Gehäuse besteht, in dem die LEDs (16) die Löcher einer Mundharmonika darstellen.

14. Gerät nach Anspruch 8, **dadurch gekennzeichnet,** daß die Anzeigevorrichtung aus einem über Kabel mit dem Gerät verbundenen Video-Computer-Interface (46) besteht, das über ein PC (47) mit einem Bildschirm (48) zur Darstellung der entsprechenden Symbole verbunden ist.

15. Gerät nach Anspruch 8, **dadurch gekennzeichnet,** daß die Anzeigevorrichtung aus einer oder mehreren Leisten (52) besteht, die über den einzelnen Manualen (49, 50) und dem Pedal (51) einer Orgel angeordnet sind.

16. Gerät nach Anspruch 8, **dadurch gekennzeichnet,** daß die Anzeigeeinrichtung (43) aus einem Band oder einem länglichen Gehäuse besteht, in dem die LEDs in Anordnung der Klangblöcke eines Xyolphons (44), eines Metallophons, eines Glockenspieles od. dgl. angeordnet sind.

17. Gehäuse nach Anspruch 16, **dadurch gekennzeichnet,** daß mit einer Serienschaltung (45) mehrere Anzeigevorrichtungen (43) für mehrere Instrumente (44) zur Gruppenunterrichtung vorgesehen sind.

18. Gerät nach Anspruch 8, **dadurch gekennzeichnet,** daß die Anzeigevorrichtung ein Schlaginstrument mit Pads (53) darstellt, wobei die LEDs z. B. mit Klettverschluß am Schlaginstrument befestigt sind.

19. Gerät nach Anspruch 8, **dadurch gekennzeichnet,** daß zur Ausführung eines Gruppenspieles mehrere Anzeigevorrichtungen für beteiligte Instrumente an das Gerät angeschlossen sind.

20. Gerät nach Anspruch 8, **dadurch gekennzeichnet,** daß die Anzeigeeinrichtung als modulare Tafel (56) mit entsprechenden Anzeigemoduls (57) ausgebildet ist, die über Kabel mit dem Gerät in Verbindung stehen.

21. Gerät nach Anspruch 20, **dadurch gekennzeichnet,** daß zwei Großbildschirme (58, 59) zur Notendarstellung und Darstellung der Instrumentenbetätigung mit dem Gerät verbunden sind.

Fig.1

Oktav
Terz
Quint
6
sus 4
ō
+
j7
m7
7
Moll
Dur
h
ais/b
a
gis/as
g
fis/ges
f
e
dis/es
d
cis/des
c
Tune
Transpose
Takt-Nr.Ende
Takt-Nr.Anf.
Lied-Nr.
MIDI-Solo off
MIDI-Begl. off
MIDI-Drums off
MIDI-
Solo on/off
Begl. on/off
Drums on/off
Metronom
Slow
Waltz
Latin
Swing
Tango
8 Beat
March
Tempo
Start/Stop
Lautstärke
Ein/Aus

Fig.2

## Fig.3

# Fig.4

EP 0 495 203 A2

Fig.5

Fig.6

EP 0 495 203 A2

Fig.7

40

39

Fig.8

16  16  16      16  16      41

16

16a

42

Fig.9

43

44

45

Fig.10

Fig.11

46 47 48

Fig.12

52

49 52

50

52

51

## Fig.13

## Fig.14

# Fig.15